# EUROPÄISCHE PATENTSCHRIFT

(11) **EP 2 322 831 B1**
(45) Veröffentlichungstag und Bekanntmachung des Hinweises auf die Patenterteilung: **29.05.2013**
(21) Anmeldenummer: 10187401.4
(22) Anmeldetag: 13.10.2010
(51) Int. Cl.: F16L 13/14, F16L 33/207

(54) **Rohrpresskupplung, insbesondere zur Verpressung von Mehrschichtrohren, sowie Verfahren zum Anbringen einer Rohrpresskupplung**
Pipe press coupling, in particular for swaging multi-layer tubing and method for applying a pipe press coupling
Raccord de serrage pour tuyaux, notamment pour la compression de tuyaux multicouche, et procédé d'application d'un raccord de serrage pour tuyaux

(30) Priorität: 12.11.2009 DE 102009044500
(43) Veröffentlichungstag der Anmeldung: 18.05.2011
(73) Patentinhaber: Reckzeh, Thomas, 44803 Bochum (DE); Reckzeh, Manfred, 63457 Hanau (DE)
(72) Erfinder: Reckzeh, Thomas, 44803 Bochum (DE); Reckzeh, Manfred, 63457 Hanau (DE)
(74) Vertreter: Bonsmann, Joachim Bernhard

(56) Entgegenhaltungen:
- EP-A1- 1 273 843
- DE-B3-102004 003 426
- DE-U1-202008 006 797
- GB-A- 926 215

## Beschreibung

Die vorliegende Erfindung betrifft eine Rohrpresskupplung, insbesondere zur Verpressung von Mehrschichtrohren, sowie ein Verfahren zum Anbringen einer Rohrpresskupplung an einem Rohrende.

Bei Mehrschichtrohren handelt es sich um einen Rohrtypus für den Sanitär- und Heizungsbau sowie viele andere Anwendungen, der insbesondere in der Form des Mehrschichtverbundrohres mittlerweile häufige Verwendung findet. Mehrschichtverbundrohre sind typischerweise sandwichartig aus einer Mehrzahl von metallischen und nicht-metallischen - z.B. mittels Kleber sowie Haftvermittlern miteinander verbundenen - Schichten aufgebaut und finden insbesondere im Installationsbereich aufgrund ihrer vorteilhaften Eigenschaften, vor allem der vergleichsweise geringen Materialstärke, der hohen Sauerstoffdichtigkeit und der guten Verarbeitbarkeit (vor allem aufgrund der im Unterschied zu Mono-Kunststoffrohren bestehenden Möglichkeit, die Rohre bis zu einem gewissen Grade inelastisch zu biegen) zunehmende Verbreitung. Neben den Mehrschichtverbundrohren sind jedoch auch im Wesentlichen aus einem sortenreinen Kunststoff hergestellte Mehrschichtrohre bekannt, bei denen beispielsweise eine Schicht eine Faser- oder Eigenverstärkung bildet.

Eine Rohrpresskupplung zum Verbinden von Rohren miteinander ist aus der gattungsbildenden EP 0 477 704 B1 bekannt. Zwei Rohrenden werden mittels einer in die beiden Rohrenden eingesetzten, am Außenumfang profilierten Stützhülse, die einen äußeren radialen Anschlagflansch für die beiden Rohrenden aufweist, zweier auf die Rohrenden aufgeschobener Quetschhülsen sowie zweier axial darüber geschobener Überwurf-Presshülsen miteinander verbunden, wobei eine Arretierung der Überwurf-Presshülse in axialer Richtung vorgesehen ist, die in einer Ausführungsform mittels einer Schnappverbindung und in einer anderen Ausführungsform mittels eines in einer umlaufenden Nut befindlichen Federringes realisiert werden kann. Die bekannte Ausführungsform unter Verwendung eines Federrings ist jedoch mit dem Nachteil behaftet, dass der Federring bei Auftreten starker Zugkräfte die Arretierung doch freigeben könnte, weshalb im Allgemeinen bislang eine federringlose Arretierung bevorzugt wurde.

Der vorliegenden Erfindung liegt die Aufgabe zu Grunde, die bekannte Rohrpresskupplung insbesondere im Hinblick auf die Anforderungen von Mehrschichtrohren zu verbessern.

Diese Aufgabe wird bei einer Rohrpresskupplung mit oder ohne Quetschhülse und bei einem Verfahren gemäß den Oberbegriffen der Patentansprüche 1 und 9 durch die kennzeichnenden Merkmale dieser Ansprüche gelöst.

Der Ring aus gummielastischem Material unterhalb des Federrings in der Ringnut lässt die Anforderungen an die Passgenauigkeit der Verrastungselemente erheblich sinken. Bisher bedurfte es insbesondere bei größeren Rohrdurchmessern und federringloser Arretierung einigen Aufwandes, die Verrastungselemente mit so kleinen Toleranzen auszubilden, dass einerseits die Überwurf-Presshülse an den Anschlagflansch geschoben werden konnte und andererseits eine zuverlässige Verrastung gewährleistet war. Mit der Erfindung ist gewährleistet, dass die Überwurf-Presshülse mit geringeren axialen Kräften aufgeschoben und arretiert werden kann, weil der Ring aus gummielastischem Material nachgibt, und dass die Verrastung sich dennoch nicht leicht löst, weil der Ring aus gummielastischem Material den Federring dauerhaft in einer Verriegelungsstellung hält.

Bei der erfindungsgemäßen Rohrpresskupplung (auch als "Fitting" bezeichnet) kann es sich um ein Winkelstück, ein T-Stück, ein Reduzierstück od. dgl. handeln. Am anderen (in den Figuren nicht dargestellten) Ende des Fittings kann sich eine (spiegelbildlich ausgebildete) gleich große, kleinere oder größere Rohrpresskupplung, ein Schraubgewinde oder irgendein anderes Anschlussstück befinden.

Der Ring aus gummielastischem Material ist vorzugsweise ein elastomerer O-Ring, kann aber auch aus irgendeinem anderen gummielastischen Voll- oder Hohlmaterial bestehen und/oder irgendeinen anderen der Komprimierbarkeit förderlichen Querschnitt haben. Bei dem Ring aus gummielastischem Material muss es sich nicht um einen abnehmbaren geschlossenen Ring handeln, sondern es ist auch möglich, dass irgendein gummielastisches Material durch Formspritzen in die Ringnut eingebracht wird, was auch abschnittsweise geschehen kann.

Das mit dem Federring in der Ringnut zusammenwirkende Verrastungsmittel an der zu verrastenden Hülse kann eine weitere Ringnut sein, wie in der EP 0 477 704 B1 gezeigt, oder es ist ein vollständig oder in Abschnitten an der äußeren Hülse umlaufender Rastvorsprung, der vorzugsweise eine Anlaufschräge für den Federring aufweist.

Eine erfindungsgemäße Rastverbindung wird vorzugsweise zur Verbindung einer Überwurf-Presshülse mit einer Stützhülse verwendet. Wird zusätzlich eine Quetschhülse zwischen der Überwurf-Presshülse und dem Rohrende vorgesehen, so ist es vorteilhaft, die Quetschhülse mittels einer an der Überwurf-Presshülse vorgesehenen ringförmigen Anschlagfläche im verpressten Zustand gegenüber der durch die Rastverbindung axial arretierten Überwurf-Presshülse axial zu fixieren. Alternativ oder zusätzlich kann so eine Quetschhülse mittels einer eigenen Federringverrastung an der Stützhülse arretiert werden.

Die den Federring aufnehmende(n) Ringnut(en) ist bzw. sind vorzugsweise in der Stützhülse und insbesondere in einem Anschlagflansch der Stützhülse, welcher vorzugsweise auf diese aufgeschraubt oder aufgepresst wird, ausgebildet, doch können diese auch an der Überwurf-Presshülse und/oder einer ggf. vorgesehenen Quetschhülse ausgebildet sein, in welchem Fall die Federringverrastung als im Querschnitt umgekehrt angeordnet anzusehen ist.

Eine besonders zuverlässige, durch Zugkräfte praktisch nicht lösbare Verrastung kann dadurch erzielt werden, dass die Ringnut im Querschnitt gestuft ausgebildet ist, derart, dass ein erster axialer Abschnitt der Ringnut den O-Ring im Wesentlichen vollständig aufnimmt, und dass ein in Verrastungsrichtung axial vor ersten Abschnitt liegender zweiter Abschnitt der Ringnut weniger tief als der erste axiale Abschnitt ist, vorzugsweise ungefähr um die Dicke des O-Rings weniger tief als der erste axiale Abschnitt der Ringnut ist. Dadurch kann der Federring bei verrasteter Rohrpresskupplung zumindest mit einem Teil seines Querschnitts in den zweiten Abschnitt hinein verschoben werden, so dass dieser mit seiner Innenseite auf der durch den zweiten Abschnitt der Ringnut gebildeten Stufe aufliegt und somit nicht mehr komprimierbar ist.

Im Falle, dass die Rohrpresskupplung auch eine Quetschhülse enthält, wird durch eine entweder direkt oder mit Hilfe der Überwurf-Presshülse mit der Stützhülse verrastete und somit axial arretierte Quetschhülse erreicht, dass die während des Betriebes der Rohrleitung auf die einzelnen Schichten des Mehrschichtrohres wirkenden Scher- bzw. Zugkräfte wesentlich besser von der Quetschhülse auf die Stützhülse abgeleitet werden können, so dass auch bei Rohrsystemen mit hoher mechanischer Belastung eine unerwünschte Trennung der Schichten des Mehrschichtrohres wirksam vermieden werden kann. Insbesondere wird die Gefahr zumindest wesentlich gemindert, dass Außenschichten des Mehrschichtrohres abgerissen werden, während Innenschichten des Mehrschichtrohres auf der Stützhülse verbleiben. Somit wird eine Fixierung des zu verbindenden Rohrendes nicht nur innenseitig erreicht (über eine ggf. am Außenumfang der Stützhülse vorhandene Profilierung), sondern auch außenseitig, d.h. an der Außenschicht des Mehrschichtrohres.

Wenngleich die Erfindung vor allem in Verbindung mit Mehrschichtrohren, insbesondere Mehrschichtverbundrohren, vorteilhaft realisierbar ist, ist die Erfindung nicht auf Mehrschichtrohre beschränkt. Vielmehr kann die Erfindung auch in Verbindung mit beliebigen anderen Rohrtypen, z.B. gewebe- oder eigenverstärkten Rohren, welche eine wesentliche Steigerung der Druckfestigkeit ermöglichen, oder in Verbindung mit Kunststoffrohren, Kupferrohren oder Stahlrohren verwendet werden.

Zusammengefasst wird gemäß der Erfindung das Verrasten zumindest teilweise durch einen während des axialen Aufschiebens der Überwurf-Presshülse vorübergehend komprimierten, durch den Elastomer-Ring zentriert gehaltenen und ggf. geschlitzten Federring bewirkt, der im verpressten Zustand der Rohrpresskupplung zwischen der Überwurf-Presshülse und der Stützhülse und/oder zwischen der Quetschhülse und der Stützhülse angeordnet ist und durch den Elastomer-Ring dauerhaft in der Verriegelungsstellung gehalten wird. Dies hat insbesondere bei größeren Rohrdurchmessern den Vorteil, dass die zur Erzielung der Verrastung der Stützhülse mit der Überwurf-Presshülse und/oder der Quetschhülse erforderlichen Kräfte reduziert werden können und dass die Anforderungen an die Passgenauigkeit der Kupplungsteile sinken.

Weitere vorteilhafte Ausgestaltungen der Erfindung sind der Beschreibung sowie den Unteransprüchen zu entnehmen.

Die Erfindung wird nachstehend anhand bevorzugter Ausführungsformen und unter Bezugnahme auf die beigefügten Abbildungen näher erläutert.

Es zeigen:
- Figur 1: einen Teil-Längsschnitt durch eine mit einer Federringverras- tung versehene Rohrpresskupplung ohne Quetschhülse im Zustand nach der Verpressung (d.h. im verpressten oder mon- tierten Zustand);
- Figur 2: einen Teil-Längsschnitt durch eine mit einer Federring- verrastung versehene Rohrpresskupplung mit Quetschhülse im verpressten Zustand; und
- Figuren 3a-c: Detaildarstellungen einer alternativen Ausführungsform einer Federringverrastung einer Rohrpresskupplung in verschiede- nen Montagestadien.

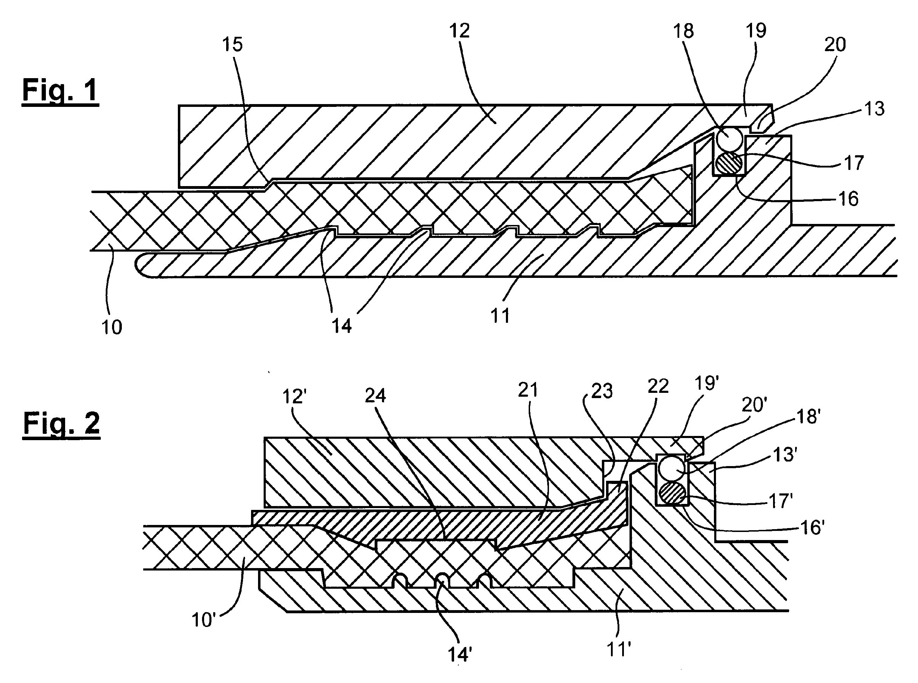

Gemäß Figur 1 enthält eine Rohrpresskupplung gemäß einer ersten Ausführungsform zum Verbinden zweier Mehrschichtverbundrohre, von denen lediglich ein Rohrende 10 schematisch dargestellt ist, eine Stützhülse 11 und zwei Überwurf-Presshülsen 12, von denen lediglich eine dargestellt ist. Selbstverständlich kann die Rohrpresskupplung auch als Winkelstück, Reduzierstück, T-Stück etc. ausgebildet sein.

Die in Figur 1 gezeigte Stützhülse 11 weist ein definiertes geringes Übermaß gegenüber dem Nenn-Innendurchmesser des Rohrendes 10 auf und wird mittels eines speziellen Werkzeugs von rechts in Figur 1 in das Rohrende 10 eingezogen, bis das Rohrende 10 stirnseitig an einem rings um die der Stützhülse 11 umlaufenden Anschlagflansch 13 anliegt. Anschließend wird die schon vorher über das Rohrende 10 geschobene Überwurf-Presshülse 12 mit definiertem Innendurchmesser von links in Figur 1 über den jetzt auf der Stützhülse 11 sitzenden und gegenüber dem äußeren Rohrnenndurchmesser aufgeweiteten Abschnitt des Rohrendes 10 mittels eines Presswerkzeugs geschoben und anschließend auf bekannte Weise mittels eines speziell angepassten hydraulischen Werkzeugs radial zusammengepresst, wobei diese radiale Pressung durch axiales zwangsweises Überschieben der Überwurf-Presshülse erreicht wird.

Die Stützhülse 11 weist an ihrem Außenumfang eine Profilierung 14 auf, so dass während des Verpressungsvorgangs bei einem Aufbringen radialer Verpresskräfte auf die Überwurf-Presshülse 12 die Innenfläche des Rohrendes 10 entsprechend der Profilierung 14 der Stützhülse 11 verformt und axial fixiert wird.

Am Ende des Verpressvorgangs gräbt sich außerdem eine Kante 15, die durch eine radial umlaufende Stufe in der Innenfläche der Überwurf-Presshülse 12 gebildet wird, in den Außenumfang des hier bereits aufgeweiteten Rohrendes 10 ein, so dass auch die Außenfläche des Rohrendes 10 axial fixiert wird.

Durch das beidseitige Verformen des Rohrendes 10 bzw. das Eingraben darin werden die während des Betriebes der Rohrleitung auf die einzelnen Schichten des Mehrschichtverbundrohres wirkenden Scher- bzw. Zugkräfte optimal verteilt, so dass auch bei Rohrsystemen mit hoher mechanischer Belastung eine unerwünschte Trennung der Schichten des Mehrschichtverbundrohres wirksam vermieden werden kann. Insbesondere wird die Gefahr zumindest wesentlich gemindert, dass Außenschichten des Mehrschichtverbundrohres abgerissen werden, während Innenschichten des Mehrschichtverbundrohres auf der Stützhülse 11 verbleiben.

Die Stützhülse 11 und die Überwurf-Presshülse 12 sind außerdem derart zusammenwirkend ausgebildet, dass beim axialen Aufschieben der Überwurf-Presshülse 12 ein Verrasten zwischen Überwurf-Presshülse 12 und Stützhülse 11 erfolgt, wodurch die Überwurf-Presshülse 12 und die Stützhülse 11 in axialer Richtung zueinander arretiert werden.

Das Verrasten erfolgt mittels einer Federringverrastung, die eine radial umlaufende, sich radial nach außen öffnende Ringnut 16 im Anschlagflansch 13 der Stützhülse 11, einen radial umlaufenden, am Boden der Ringnut 16 anliegenden elastischen O-Ring 17, dessen Schnurstärke ein wenig kleiner als die Breite der Ringnut 16 ist, einen außen um den O-Ring 17 herum verlaufenden Federring 18, dessen Breite ein wenig kleiner als die Breite der Ringnut 16 ist und der mit einem Teil seines Querschnitts noch in der Ringnut 16 liegt, die eine entsprechende Tiefe hat, und einen axialen Fortsatz 19 am stirnseitigen Ende der Überwurf-Presshülse 12 mit einer radial nach innen gerichteten radial umlaufenden Nase 20 umfasst.

Der Fortsatz 19 und die Nase 20 erstrecken sich im montierten Zustand der Rohrpresskupplung radial um den Anschlagflansch 13 herum, wobei die Nase 20 den Federring 18 hintergreift, so dass die Überwurf-Presshülse 12 auf der Stützhülse 11 einrastet, wenn sie auf das Rohrende 10 aufgeschoben wird.

Der Fortsatz 19 und/oder die Nase 20 können in axialer Richtung geschlitzt sein, d.h. aus einzelnen Abschnitten bestehen, die sich in Abständen rings um die Stirnseite der Überwurf-Presshülse 12 erstrecken.

Das vorübergehende Komprimieren des Federrings 18 beim Aufschieben der Überwurf-Presshülse 12 wird durch eine stirnseitige Anlaufschräge an der Nase 20 erleichtert.

Beim Aufschieben der Überwurf-Presshülse 12 auf das Rohrende 10 wird der Federring 18 durch den O-Ring 17 zentriert gehalten, so dass er im Wesentlichen überall gleichzeitig einrastet, wodurch beim Verrasten der Rohrpresskupplung ein definiertes Einrastgeräusch erzeugt wird, das dem Monteur anzeigt, dass die Überwurf-Presshülse 12 korrekt eingerastet ist.

Die in Figur 1 im verpressten Zustand gezeigte Rohrpresskupplung enthält somit eine Schnappverbindung oder Federringverrastung aus dem (ggf. geschlitzten) Federring 18 und dem benachbart hierzu anliegenden elastischen O-Ring 17 innerhalb der Ringnut 16 im Anschlagflansch 13 der Stützhülse 11. Beim axialen Überschieben der Überwurf-Presshülse 12, welche am stirnseitigen Ende mit dem Fortsatz 19 versehen ist, welcher zusammen mit seiner radial nach innen vorstehenden Nase 20 als Arretierelement wirkt, werden der Federring 18 und der O-Ring 17 vorübergehend komprimiert, woraufhin der Federring 18 bis zum Erreichen seiner Endstellung wieder expandiert, wodurch eine Verrastung zwischen Überwurf-Presshülse 12 und Stützhülse 11 erzielt wird.

Die in Figur 1 gezeigte Arretierung der Überwurf-Presshülse 12 mittels eines Federrings kann in analoger Weise auch zur Arretierung einer zwischen dem Rohrende 10 und der Überwurf-Presshülse 12 liegenden Quetschhülse vorgesehen werden. In diesem Fall könnte man die nötige Ringnut z.B. in der Außenfläche der Stützhülse 11 ausbilden, an der auch die Profilierung 14 ausgebildet ist, falls die Wandstärke der Stützhülse 11 hierfür ausreicht, oder im Bereich des Anschlagflansches 13 der Stützhülse 11.

Die Ringnut 16 mit O-Ring und Federring muss nicht notwendigerweise an der Stützhülse 11 bzw. deren Anschlagflansch 13 ausgebildet sein, sondern eine entsprechende Ringnut kann auch in dem zu arretierenden Gegenstück ausgebildet sein, d.h. in der Überwurf-Presshülse 12 und/oder einer Quetschhülse, in welchem Falle das am Federring angreifende Arretierelement in Form einer Nase, einer flacheren Ringnut od. dgl. an der Stützhülse 11 auszubilden wäre.

Die Figur 2, in der Bezugszeichen für gegenüber Figur 1 analoge Komponenten jeweils mit einem Strich versehen sind, zeigt eine zweite Ausführungsform der Erfindung, bei der zwischen Rohrende 10' und Überwurf-Presshülse 12' eine Quetschhülse 21 vorgesehen ist, die ebenso wie die Überwurf-Presshülse 12' axial fixiert wird, aber nicht durch direkte Verrastung der Quetschhülse 21 mit der Stützhülse 11'. Vielmehr erfolgt eine Verrastung der Überwurf-Presshülse 12' mit der Stützhülse 11', und die Quetschhülse 21 ist dann indirekt aufgrund einer formschlüssigen Verbindung mit der Überwurf-Presshülse 12' axial gegenüber der Stützhülse 11' festgelegt.

Die Quetschhülse 21 weist ihrem mit dem Rohrende 10' bündigen Ende einen auf ihrer Außenseite ringförmig umlaufenden Anschlagflansch 22 auf. Dieser Anschlagflansch 22 wirkt im verpressten Zustand gemäß Figur 2 mit einer an der Überwurf-Presshülse 12' ausgebildeten Anschlagfläche 23 derart zusammen, dass die Quetschhülse 21 gegen Herausziehen aus der Überwurf-Presshülse 12' blockiert ist, wodurch die Quetschhülse 21 wiederum gegenüber der Stützhülse 11' arretiert ist.

Die Überwurf-Presshülse 12' ist analog zu der vorstehend beschriebenen Ausführungsform mit einer Rasteinrichtung 17', 18', 19', 20' versehen, die die Überwurf-Presshülse 12' im verpressten Zustand durch Federringverrastung gegenüber der Stützhülse 11' axial sichert.

Im Ergebnis ist das Rohrende 10' somit wirksam sowohl von der Außenseite her als auch von der Innenseite her axial fixiert. Die Fixierung von der Außenseite her wird noch fester mittels einer Profilierung 24 in Form einer scharfkantigen flachen Ringnut in der Innenfläche der Quetschhülse 21. Das Material des Rohrendes 10' gräbt sich in die Profilierung 24 ein, was - als Resultat der mit dem Verpressungsvorgang einhergehenden Verformung und des hierdurch bewirkten Eingriffs mit der Außenseite des Rohrendes 10' - einer Relativbewegung zwischen der Außenseite des Rohrendes 10' und der Quetschhülse 21 zusätzlich entgegenwirkt.

Wenngleich bei dem in Figur 2 dargestellten Ausführungsbeispiel die Verrastung der Quetschhülse 21 mit der Stützhülse 11' in der Regel bereits während des axialen Aufschiebens der Überwurf-Presshülse 12' und vor dem eigentlichen Verpressungsvorgang erfolgt (die Überwurf-Presshülse 12' überträgt die Verpresskraft auf die Quetschhülse 21, bis diese ihre Endstellung erreicht hat, und gleitet erst dann zwangsweise über die Quetschhülse 21), ist die Erfindung nicht hierauf beschränkt.

Vielmehr kann gemäß einer weiteren (nicht dargestellten) Ausführungsform die Verrastung zwischen Quetschhülse und Stützhülse erst durch den eigentlichen Verpressungsvorgang und die damit einhergehende Deformation hergestellt werden, wohingegen im unverpressten Zustand lediglich Quetschhülse und Stützhülse (ohne Verrastung) aneinander entlang gleiten. Hierzu kann an der Quetschhülse z.B. ein Vorsprung, eine Nase oder dergleichen vorgesehen sein, welche(r) während des Verpressungsvorganges als Materialausgleich für den im axial benachbarten Bereich der Quetschhülse stattfindenden Quetschvorgang radial etwas nach außen expandiert, wodurch eine Fixierung z.B. mit einem an der Stützhülse vorgesehenen Hinterschnitt hergestellt werden kann.

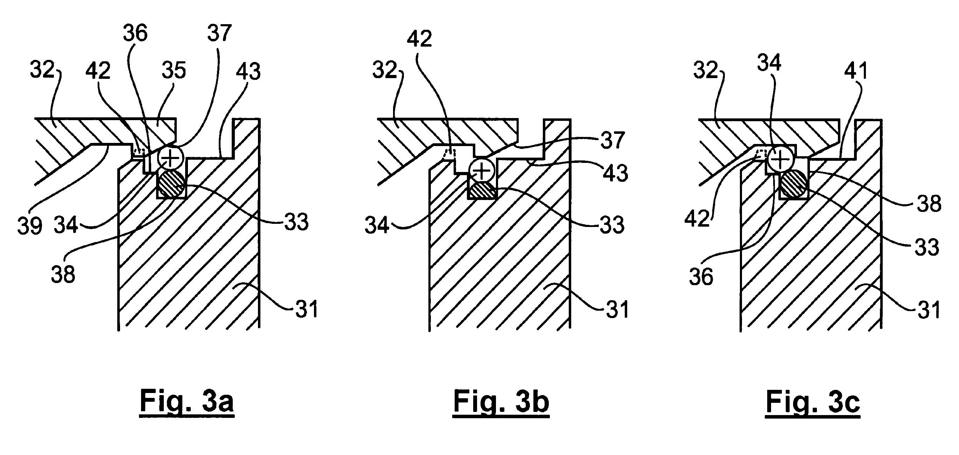

Die Figuren 3a bis 3c sind vergrößerte Teil-Längschnittansichten einer weiteren Ausführungsform einer Federringverrastung zwischen einer Überwurf-Presshülse 32 und einer Stützhülse 31 in verschiedenen Montagestadien. Diese Verrastung ist sowohl bei der in Figur 1 dargestellten Rohrpresskupplung ohne Quetschhülse als auch bei der in Figur 2 dargestellten Rohrpresskupplung mit indirekt axial fixierter Quetschhülse einsetzbar. Ferner ist diese Verrastung - in doppelter Ausführung - auch zur Verrastung sowohl der Quetsch- als auch der Überwurf-Presshülse in einer Ausführungsform gemäß Figur 2 geeignet.

Ähnlich der anhand von Figuren 1 und 2 beschriebenen Federringverrastung ist die Verrastung gemäß den Figuren 3a-c durch einen (vorzugsweise geschlitzten) Federring 34 sowie einen darunter liegenden Elastomer- oder O-Ring 33 gebildet.

Der O-Ring 33 liegt in einer Ringnut 38, die in der Stützhülse 31 bzw. einem dem Anschlagflansch 13, 13' in Figuren 1 und 2 entsprechenden Anschlagflansch der Stützhülse 31 ausgebildet ist.

Die Überwurf-Presshülse 32 weist stirnseitig einen umlaufenden Fortsatz 35 mit einem eine Rastnase definierenden Hinterschnitt 39 auf. Der Fortsatz 35 muss nicht vollständig umlaufend sein, sondern es genügt, wenn er in Teilbereichen des stirnseitigen Umfangs der Überwurf-Presshülse 32 vorgesehen ist. Bei dem in den Figuren 3a und 3b dargestellten Überschieben der Überwurf-Presshülse 32 gleitet der Fortsatz 35 über den Federring 34 und komprimiert diesen, wenn der Fortsatz 35 mit einer Anlaufschräge 37 über den Federring 34 gleitet. Dabei wird der Federring 34 durch den darunter liegenden O-Ring 33 zentriert gehalten und unterstützt, wobei der vorzugsweise aus einem Elastomer ausgebildete O-Ring 33 komprimiert wird. Indem der O-Ring 33 den Federring 34 in einer zentrierten Lage hält, wird ein Verkanten des Federrings 34 beim Aufschieben der Überwurf-Presshülse 32 verhindert. Kurz bevor die Überwurf-Presshülse 32 ihre endgültige Verpressungsposition erreicht, gibt der axial auf die Anlaufschräge 37 folgende Hinterschnitt 39 am Fortsatz 35 der Überwurf-Presshülse 32 den Federring 34 umfangsseitig frei, wodurch letzterer sowie der darunter liegende O-Ring 33 wieder expandieren. Hierdurch wird die Überwurf-Presshülse 32 axial festgelegt. Auch diese Federringverrastung macht sich beim Verpressen durch ein definiertes Einrastgeräusch bemerkbar.

Wie weiterhin in den Figuren 3a-c dargestellt, kann in einer alternativen Ausführungsform der Außendurchmesser der Stützhülse 31 gegenüber dem kleinsten Innendurchmesser der Überwurf-Presshülse 32 geringfügig vergrößert werden, wie in den Figuren 3a-c bei 42 gestrichelt (nicht maßstäblich) angedeutet, wohingegen die Bereiche 43 der Stützhülse 31 jenseits der Ringnut 38 keinen vergrößerten Durchmesser aufweisen. Die Überwurf-Presshülse 32 müsste sich daher bei Herstellung der Verpressung zunächst leicht weiten, um den Bereich 42 zu überwinden. Dadurch wird der Federring 34 in der in Figur 6c dargestellten Situation zusätzlich arretiert und die Überwurf-Presshülse damit noch sicherer zurückgehalten. Eine entsprechende Vergrößerung des Durchmessers der Stützhülse ist auch bei den Ausführungsformen gemäß Figuren 1 und 2 möglich.

Wird nach Herstellung der Verpressung eine verstärkte axiale Zugkraft zwischen Überwurf-Presshülse 32 und Stützhülse 31 aufgebracht, so weist die Anordnung, wie aus Figur 6c ersichtlich, ein zusätzliches Mittel zur Sicherstellung der axialen Fixierung der Presshülse auf. Dabei handelt es sich um einen Abschnitt 36 (siehe Figur 6c) der Ringnut 38 in der Stützhülse 31, welcher Abschnitt 36 durch eine Stufe an der Ringnut 38 gebildet wird, die - in Richtung auf das Rohrende - vor der Ringnut 38 angeordnet ist. Der Nutabschnitt 36 ist weniger tief als der Wesentlichen von dem O-Ring 33 ausgefüllte Hauptabschnitt der Ringnut 38. Die Tiefe des Nutabschnitts 36 ist so gewählt, dass dort nur der Federring 34 darin aufgenommen werden kann, nicht jedoch der darunter liegende O-Ring 33.

Im montierten Zustand, ist der Federring 34 aufgrund der Federkraft des O-Rings 33 expandiert. Wenn in diesem Zustand eine axiale Zugkraft auf die Überwurf-Presshülse 32 wirkt, die zu einem Abziehen derselben führen könnte, wird der Federring 34 mit einem Teil seines Querschnitts in den Nutabschnitt 36 gezogen, wie in Figur 3c gezeigt. Im Nutabschnitt 36 kann sich der Federring 34 nicht mehr komprimieren, weil er auf der davon gebildeten Stufe aufliegt, so dass ein axiales Abziehen der Überwurf-Presshülse 32 auch bei starken Zugkräften praktisch unmöglich ist.

Der Federring 34 ist bevorzugt aus einem Federstahl hergestellt und geschlitzt ausgebildet. Die Breite des Schlitzes ist an die zu erwartenden Komprimierungen des Federrings angepasst. Ferner ist es auch denkbar, einen geschlitzten Federring zu verwenden, bei dem sich die Enden überlappen. Das Querschnittsprofil des Federrings kann in nicht dargestellten Ausführungsformen auch unrund, insbesondere rechteckig oder quadratisch ausgebildet sein, was die gewünschte Arretierwirkung sogar noch verstärken kann.

Auf diese Weise verbindet das vorbeschriebene Verrastungskonzept den Vorteil sehr geringer Kräfte für die Herstellung der Verrastung - was insbesondere bei Rohrpresskupplungen mit großen Rohrdurchmessern relevant ist - mit extrem hohen Blockierungskräften. Wie bereits erwähnt, kann eine entsprechende Verrastung alternativ oder zusätzlich auch für die Quetschhülse erfolgen.

Weiterhin ist an dem vorstehend dargestellten Verrastungskonzept vorteilhaft, dass die Stützhülse und die Press- bzw. Quetschhülsen jeweils rotationssymmetrisch ausgebildet sind, was eine kostengünstige Herstellung durch Drehen od. dgl. ermöglicht.

Die vorstehend beschriebenen und dargestellten Arretierungsarten können auch zur Arretierung der Presshülsen von Rohrpresskupplungen gemäß allen Ausführungsformen der EP 0 477 704 B1 verwendet werden.

## Patentansprüche

1. Rohrpresskupplung, insbesondere zur Verpressung von Mehrschichtrohren, insbesondere von Mehrschichtverbundrohren, mit einer in ein Rohrende (10; 10') passenden Stützhülse (11; 11'; 31), einer entweder direkt oder unter Dazwischenlegung einer Quetschhülse (21) auf das Rohrende passenden Überwurf-Presshülse (12; 12', 32) sowie Verrastungsmitteln zur Fixierung der Überwurf-Presshülse und/oder der Quetschhülse in axialer Richtung relativ zur Stützhülse, wobei die Verrastungsmittel mindestens eine radial umlaufende Ringnut (16; 16'; 38) an einer der Hülsen (11; 11'; 31; 12; 12'; 32; 21) und einen in der mindestens einen Ringnut aufgenommenen Federring (18; 18'; 34) umfassen,
**dadurch gekennzeichnet, dass**
in der mindestens einen Ringnut (16; 16'; 38) ein Ring (17; 17'; 33) aus gummielastischem Material angeordnet ist, der den Federring (18; 18'; 34) vom Boden der Ringnut trennt.

2. Rohrpresskupplung nach Anspruch 1,
**dadurch gekennzeichnet, dass**
der Ring (17; 17'; 33) aus gummielastischem Material dahingehend angeordnet ist, dass dieser den Federring (18; 18'; 34) zentriert.

3. Rohrpresskupplung nach Anspruch 1 oder 2,
**dadurch gekennzeichnet, dass**
der Ring (17; 17'; 33) aus gummielastischem Material ein O-Ring ist.

4. Rohrpresskupplung nach einem der Ansprüche 1 bis 3,
**dadurch gekennzeichnet, dass**
der Federring einen kreisförmigen oder einen vieleckigen, insbesondere rechteckigen, Querschnitt aufweist.

5. Rohrpresskupplung nach einem der Ansprüche 1 bis 4,
**dadurch gekennzeichnet, dass**
die Verrastungsmittel zur Fixierung der Überwurf-Presshülse (12; 12', 32) relativ zur Stützhülse (11; 11'; 31) dienen und dass die den Federring (18; 18'; 34) aufnehmende Ringnut (16; 16'; 38) an der Stützhülse ausgebildet ist.

6. Rohrpresskupplung nach einem der Ansprüche 1 bis 5,
**dadurch gekennzeichnet, dass**
zwischen der Überwurf-Presshülse (12; 12', 32) und dem Rohrende (10; 10') eine Quetschhülse (21) vorgesehen ist, die mittels einer an der Überwurf-Presshülse vorgesehenen ringförmigen Anschlagfläche (23) im verpressten Zustand gegenüber der Überwurf-Presshülse axial fixiert ist.

7. Rohrpresskupplung nach einem der vorstehenden Ansprüche,
**dadurch gekennzeichnet, dass**
die Stützhülse (11; 11'; 31) zweiteilig mit einem aufgeschraubtem Anschlagflansch (13; 13') ausgebildet ist.

8. Rohrpresskupplung nach einem der vorhergehenden Ansprüche,
**dadurch gekennzeichnet, dass**
die Stützhülse (11; 11'; 31) einen radial äußeren Anschlagflansch (13; 13') für das Rohrende (10; 10') aufweist, in dem die mindestens eine, den Ring (17; 17'; 33) aus gummielastischem Material und den Federring (18; 18'; 34) aufnehmende Ringnut (16; 16'; 38) ausgebildet ist, so dass sie sich radial nach außen öffnet, und dass die Überwurf-Presshülse (12; 12', 32) mindestens einen axialen Fortsatz (19; 19'; 35) mit mindestens einer radial nach innen gerichteten Nase (20; 20') aufweist, wobei bei axialem Aufschieben der Überwurf-Presshülse auf die Stützhülse der mindestens eine Fortsatz über den Anschlagflansch gelangt und die mindestens eine Nase den Federring hintergreift, so dass die Überwurf-Presshülse auf der Stützhülse einrastet.

9. Rohrpresskupplung nach Anspruch 8,
**dadurch gekennzeichnet, dass**
der axiale Fortsatz (19; 19'; 35) bzw. dessen Nase (20; 20') eine Anlaufschräge (37) für den Federring (18; 18'; 34) aufweist, an welcher Anlaufschräge der Federring und das darunter liegende gummielastische Material beim Verrasten der Rohrpresskupplung radial komprimiert werden, bevor sie wieder expandieren und dadurch der Federring hinter der Nase einrastet.

10. Rohrpresskupplung nach einem der vorhergehenden Ansprüche,
**dadurch gekennzeichnet, dass**
die mindestens eine Ringnut (38) im Querschnitt gestuft ist, derart, dass ein erster axialer Abschnitt der Ringnut den Ring (33) aus gummielastischem Material im Wesentlichen vollständig aufnimmt und dass ein in Verrastungsrichtung axial vor ersten Abschnitt liegender zweiter axialer Abschnitt (36) der Ringnut weniger tief als der erste axiale Abschnitt ist.

11. Rohrpresskupplung nach Anspruch 10,
**dadurch gekennzeichnet, dass**
die zweite axiale Abschnitt (36) der Ringnut (38) ungefähr um die Dicke des Rings (33) aus gummielastischem Material weniger tief als der erste axiale Abschnitt der Ringnut ist.

12. Verfahren zum Anbringen einer Rohrpresskupplung an einem Rohrende (10; 10') insbesondere eines Mehrschichtrohres, insbesondere eines Mehrschichtverbundrohres, wobei in das Rohrende eine Stützhülse (11; 11'; 31) eingesetzt wird, wahlweise auf dem Rohrende eine Quetschhülse (21) angeordnet wird und anschließend eine Überwurf-Presshülse (12; 12', 32) auf das Rohrende bzw. die Quetschhülse aufgeschoben wird, wodurch oder wonach eine Verpressung der Rohrpresskupplung erfolgt, wobei die Überwurf-Presshülse und/oder die Quetschhülse mittels eines in eine Ringnut (16; 16'; 38) eingelegten Federrings (18; 18'; 34) mit der Stützhülse verrastet,
**dadurch gekennzeichnet, dass**
vor dem Einlegen des Federrings (18; 18'; 34) ein Ring (17; 17'; 33) aus gummielastischem Material in die Ringnut (16; 16'; 38) eingebracht wird, welches gummielastische Material den Federring tendenziell in einem Abstand vom Boden der Ringnut hält.

13. Verfahren nach Anspruch 12,
**dadurch gekennzeichnet, dass**
der Ring (17; 17'; 33) aus gummielastischem Material den Federring zentriert.

14. Verfahren nach Anspruch 12 oder 13,
**dadurch gekennzeichnet, dass**
die Rohrpresskupplung gemäß einem der Ansprüche 1 bis 11 ausbildet ist.

## Claims

1. A compression pipe joint, in particular for pressing multi-layer pipes, in particular multi-layer composite pipes, comprising a support sleeve (11; 11'; 31), which fits into a pipe end (10; 10'), a clamping pressing sleeve (12; 12', 32) which fits on to the pipe end directly or with the interposition of a crushing sleeve (21), and latching means for fixing the clamping pressing sleeve and/or the crushing sleeve in the axial direction relative to the support sleeve, wherein the latching means include at least one radially peripherally extending annular groove (16; 16'; 38) on one of the sleeves (11; 11'; 31; 12; 12'; 32; 21) and a spring ring (18; 18'; 34) received in the at least one annular groove,
**characterised in that**
arranged in the at least one annular groove (16; 16'; 38) is a ring (17; 17'; 33) of rubber-elastic material which separates the spring ring (18; 18'; 34) from the bottom of the annular groove.

2. A compression pipe joint according to claim 1 **characterised in that** the ring (17; 17'; 33) of rubber-elastic material is so arranged that it centres the spring ring (18; 18'; 34).

3. A compression pipe joint according to claim 1 or claim 2 **characterised in that** the ring (17; 17'; 33) of rubber-elastic material is an O-ring.

4. A compression pipe joint according to one of claims 1 to 3 **characterised in that** the spring ring is of a circular or a polygonal, in particular rectangular, cross-section.

5. A compression pipe joint according to one of claims 1 to 4 **characterised in that** the latching means serve to fix the clamping pressing sleeve (12; 12'; 32) relative to the support sleeve (11; 11'; 31) and that the annular groove (16; 16'; 38) accommodating the spring ring (18; 18'; 34) is provided on the support sleeve.

6. A compression pipe joint according to one of claims 1 to 5 **characterised in that** provided between the clamping pressing sleeve (12; 12'; 32) and the pipe end (10; 10') is a crushing sleeve (21) which is axially fixed in the pressed condition with respect to the clamping pressing sleeve by means an annular abutment surface (23) provided on the clamping pressing sleeve.

7. A compression pipe joint according to one of the preceding claims **characterised in that** the support sleeve (11; 11'; 31) is of a two-part configuration with a screwed-on abutment flange (13; 13').

8. A compression pipe joint according to one of the preceding claims **characterised in that** the support sleeve (11; 11'; 31) has a radially outer abutment flange (13; 13') for the pipe end (10; 10'), in which there is provided the at least one annular groove (16; 16'; 38) which accommodates the ring (17; 17'; 33) of rubber-elastic material and the spring ring (18; 18'; 34) so that it opens radially outwardly and that the clamping pressing sleeve (12; 12', 32) has at least one axial extension (19; 19'; 35) having at least one radially inwardly directed nose (20; 20'), wherein when the clamping pressing sleeve is axially pushed on to the support sleeve the at least one extension passes over the abutment flange and the at least one nose engages behind the spring ring so that the clamping pressing sleeve is latched on the support sleeve.

9. A compression pipe joint according to claim 8 **characterised in that** the axial extension (19; 19'; 35) or its nose (20; 20') has an inclined run-on surface (37) for the spring ring (18; 18'; 34), at which inclined run-on surface the spring ring and the rubber-elastic material disposed therebeneath are radially compressed upon latching of the compression pipe joint before they expand again and thereby the spring ring latches behind the nose.

10. A compression pipe joint according to one of the preceding claims **characterised in that** the at least one annular groove (38) is stepped in cross-section in such a way that a first axial portion of the annular groove substantially completely accommodates the ring (33) of rubber-elastic material and that a second axial portion (36) of the annular groove, that is axially in front of the first portion in the latching direction, is less deep than the first axial portion.

11. A compression pipe joint according to claim 10 **characterised in that** the second axial portion (36) of the annular groove (38) is less deep approximately by the thickness of the ring (33) of rubber-elastic material than the first axial portion of the annular groove.

12. A method of fitting a compression pipe joint to a pipe end (10; 10'), in particular of a multi-layer pipe, in particular a multi-layer composite pipe, wherein a support sleeve (11; 11'; 31) is fitted into the pipe end, a crushing sleeve (21) is optionally arranged on the pipe end and then a clamping pressing sleeve (12; 12', 32) is pushed on to the pipe end or the crushing sleeve respectively, whereby or whereafter pressing of the compression pipe joint is effected, in which case the clamping pressing sleeve and/or or the crushing sleeve is latched to the support sleeve by means of a spring ring (18; 18'; 34) which is fitted into an annular groove (16; 16'; 38),
**characterised in that**
prior to insertion of the spring ring (18; 18'; 34) a ring (17; 17'; 33) of rubber-elastic material is introduced into the annular groove (16; 16'; 38), which rubber-elastic material tends to hold the spring ring at a spacing from the bottom of the annular groove.

13. A method according to claim 12 **characterised in that** the ring (17; 17'; 33) of rubber-elastic material centres the spring ring.

14. A method according to claim 12 or claim 13 **characterised in that** the compression pipe joint is designed in accordance with one of claims 1 to 11.

## Revendications

1. accouplement de serrage pour tuyaux multicouches, en particulier pour le pressage de tuyaux multicouches, en particulier de tuyaux composites multicouches, avec une douille d'appui (11 ; 11' ; 31) ajustée à une extrémité de tuyau (10 ; 10'), une douille de compression d'accouplement (12 ; 12', 32) ajustée à l'extrémité de tuyau, directement ou en intercalant une douille de sertissage (21), ainsi que des moyens d'enclenchement pour la fixation de la douille de compression d'accouplement et/ou de la douille de sertissage dans la direction axiale par rapport à la douille d'appui, dans lequel les moyens d'enclenchement comprennent au moins une rainure annulaire radialement périphérique (16 ; 16' ; 38) sur l'une des douilles (11 ; 11' ; 31 ; 12 ; 12' ; 32 ; 21) et une rondelle élastique (18 ; 18' ; 34) admise dans l'au moins une rainure annulaire,
**caractérisé en ce que**
un anneau (17 ; 17' ; 33) constitué d'une matière caoutchouteuse élastique et séparant la rondelle élastique (18 ; 18' ; 34) du fond de la rainure annulaire est agencé dans l'au moins une rainure annulaire (16 ; 16' ; 38).

2. Accouplement de serrage pour tuyaux selon la revendication 1,
**caractérisé en ce que**
l'anneau (17 ; 17' ; 33) constituée d'une matière caoutchouteuse élastique est agencé de manière à centrer la rondelle élastique (18 ; 18' ; 34).

3. Accouplement de serrage pour tuyaux selon la revendication 1 ou 2,
**caractérisé en ce que**
l'anneau (17 ; 17' ; 33) constitué d'une matière caoutchouteuse élastique est un joint torique.

4. Accouplement de serrage pour tuyaux selon l'une des revendications 1 à 3,
**caractérisé en ce que**
la rondelle élastique comporte une section transversale circulaire ou polygonale, en particulier rectangulaire.

5. Accouplement de serrage pour tuyaux selon l'une des revendications 1 à 4,
**caractérisé en ce que**
les moyens d'enclenchement permettent de fixer la douille de compression d'accouplement (12 ; 12', 32) par rapport à la douille d'appui (11 ; 11' ; 31), et **en ce que** la rainure annulaire (16 ; 16' ; 38) recevant la rondelle élastique (18 ; 18' ; 34) est formée sur la douille d'appui.

6. Accouplement de serrage pour tuyaux selon l'une des revendications 1 à 5,
**caractérisé en ce que**
entre la douille de compression d'accouplement (12 ; 12', 32) et l'extrémité de tuyau (10 ; 10'), il est prévu une douille de sertissage (21) fixée axialement par rapport à la douille de compression d'accouplement, dans l'état compressé, au moyen d'une surface de butée annulaire (23) prévue sur la douille de compression d'accouplement.

7. Accouplement de serrage pour tuyaux selon l'une des revendications précédentes,
**caractérisé en ce que**
la douille d'appui (11 ; 11' ; 31) est conçue en deux parties avec un collet de butée (13 ; 13') vissé dessus.

8. Accouplement de serrage pour tuyaux selon l'une des revendications précédentes,
**caractérisé en ce que**
la douille d'appui (11 ; 11' ; 31) comporte un collet de butée (13 ; 13') radialement extérieur pour l'extrémité de tuyau (10 ; 10'), dans lequel est formée l'au moins une rainure annulaire (16 ; 16' ; 38) recevant l'anneau (17 ; 17' ; 33) constitué d'une matière caoutchouteuse élastique ainsi que la rondelle élastique (18 ; 18' ; 34), de manière à s'ouvrir radialement vers l'extérieur, et **en ce que** la douille de compression d'accouplement (12 ; 12', 32) comporte au moins un prolongement axial (19 ; 19' ; 35) avec au moins un nez (20 ; 20') orienté radialement vers l'intérieur, où, lors d'un déplacement axial de la douille de compression d'accouplement sur la douille d'appui, l'au moins un prolongement vient par-dessus le collet de butée et l'au moins un nez s'engage derrière la rondelle élastique, de façon à ce que la douille de compression d'accouplement s'enclenche sur la douille d'appui.

9. Accouplement de serrage pour tuyaux selon la revendication 8,
**caractérisé en ce que**
le prolongement axial (19 ; 19' ; 35) ou son nez (20 ; 20') comporte un chanfrein d'attaque (37) pour la rondelle élastique (18 ; 18' ; 34), où la rondelle élastique et la matière caoutchouteuse élastique située en-dessous sont comprimées radialement sur le chanfrein d'attaque lors de l'enclenchement de l'accouplement de serrage pour tuyaux, avant d'être de nouveau expansées de manière à ce que la rondelle élastique (18 ; 18' ; 34) s'enclenche derrière le nez.

10. Accouplement de serrage pour tuyaux selon l'une des revendications précédentes,
**caractérisé en ce que**
l'au moins une rainure annulaire (38) est étagée dans sa section transversale, de sorte qu'une première section axiale de la rainure annulaire reçoit essentiellement l'anneau (33) en matière caoutchouteuse élastique, et qu'une deuxième section axiale (36) située axialement devant la première section dans la direction d'enclenchement est moins profonde que la première section axiale.

11. Accouplement de serrage pour tuyaux selon la revendication 10,
**caractérisé en ce que**
la deuxième section axiale (36) de la rainure annulaire (38) est moins profonde que la première section axiale de la rainure annulaire, de l'équivalent de l'épaisseur de l'anneau (33) en matière caoutchouteuse élastique.

12. Procédé pour la fixation d'un accouplement de serrage pour tuyaux sur une extrémité de tuyau (10 ; 10'), en particulier d'un tuyau multicouches, en particulier un tuyau composite multicouches, dans lequel une douille d'appui (11 ; 11' ; 31) est placée dans l'extrémité de tuyau, une douille de sertissage (21) peut être montée au choix sur l'extrémité de tuyau, puis une douille de compression d'accouplement (12 ; 12', 32) est glissée sur l'extrémité de tuyau ou la douille de sertissage, entraînant ainsi une compression de l'accouplement de serrage pour tuyaux, où la douille de compression d'accouplement et/ou la douille de sertissage s'enclenche avec la douille d'appui au moyen d'une rondelle élastique (18 ; 18' ; 34) placée dans une rainure annulaire (16 ; 16' ; 38),
**caractérisé en ce que**
avant l'insertion de la rondelle élastique (18 ; 18' ; 34), un anneau (17 ; 17' ; 33) en matière caoutchouteuse élastique est placé dans la rainure annulaire (16 ; 16' ; 38), ladite matière caoutchouteuse élastique permettant de maintenir la rondelle élastique à distance du fond de la rainure annulaire.

13. Procédé selon la revendication 12,
**caractérisé en ce que**
l'anneau (17 ; 17' ; 33) en matière caoutchouteuse élastique permet de centrer la rondelle élastique.

14. Procédé selon la revendication 12 ou 13,
**caractérisé en ce que**
l'accouplement de serrage pour tuyaux est conçu selon l'une des revendications 1 à 11.
